# EUROPÄISCHE PATENTSCHRIFT

(11) **EP 4 151 569 B1**
(45) Veröffentlichungstag und Bekanntmachung des Hinweises auf die Patenterteilung: **19.03.2025**
(21) Anmeldenummer: 22183784.2
(22) Anmeldetag: 08.07.2022
(51) Int. Cl.: B65G 53/52, B65G 53/56

(54) **ABSPERRSCHIEBER MIT BYPASSVORRICHTUNG**
SHUT-OFF VALVE WITH BYPASS DEVICE
VANNE D'ARRÊT POURVUE DE DISPOSITIF DE DÉRIVATION

(30) Priorität: 15.09.2021 DE 102021123812
(43) Veröffentlichungstag der Anmeldung: 22.03.2023
(73) Patentinhaber: Siloanlagen Achberg Holding GmbH, 88147 Achberg (DE)
(72) Erfinder: MAASS, Gerd, 88147 Achberg (DE)
(74) Vertreter: Riebling, Peter

(56) Entgegenhaltungen:
- EP-A1- 3 505 321
- DE-U1- 202011 100 690

## Beschreibung

Gegenstand der Erfindung ist eine Kombination einer Förderleitung mit einem Absperrschieber mit einer Bypassvorrichtung für die Förderleitung für die pneumatische Förderung von Schüttgütern nach dem Oberbegriff des Patentanspruches 1.

Ein Absperrschieber dient zum vollständigen Öffnen oder Schließen des gesamten Durchflussquerschnitts einer Förderleitung für die pneumatische Förderung von Schüttgütern. Absperrschieber dienen auch der Vorabsperrung, um ein Fördermedium am Durchfluss zu hindern, und gleichzeitig vor Beendigung des Saugvorgangs die Förderleitung leerzusaugen.

In der Kunststoffverarbeitung wird das Förderprinzip der pneumatischen Förderung angewendet, wobei das Fördergut mit Luft durch eine Förderleitung transportiert wird. Der Materialtransport erfolgt meist mittels Unterdrucks (Saugförderung mit Vakuum), wobei es sich bei dem Fördergut um Schüttgüter wie Granulat, Pellets, Pulver, Mahlgut, Flakes oder Fasern handelt.

Ein in Längsrichtung innerhalb des Absperrschiebers beweglich angetriebener Schieber schließt und öffnet als Absperrkörper den Durchflussquerschnitt der Förderleitung, wobei eine beidseitig lineare Führung des Schiebers nötig ist, um diesen verkantungsfrei zu führen.

Zum Öffnen und Schließen des Schiebers sind aufgrund des in der Förderleitung herrschenden Drucks hohe Kräfte erforderlich, welche von einem Antriebsmechanismus erzeugt werden. Zum Abbau des statischen Drucks kann eine kleinere Absperrarmatur dienen, die einen Bypass um den eigentlichen Schieber herum öffnet.

Ein derartiger Bypass kann auch verwendet werden, um bei geschlossenem Schieber einen Bypassluftstrom durch die dem geschlossenen Schieber in Strömungsrichtung nachfolgende Förderleitung strömen zu lassen. Dieser Spülluftstrom kann dann z.B. die Förderleitung von Schüttgütern reinigen.

Es sind verschiedene Arten von Absperrschiebern bekannt; so werden im Anlagenbau sogenannte Schüttgutschieber zum Absperren von Schüttgütern aller Art verwendet. In der Verfahrenstechnik dienen Schüttgutschieber zum sicheren Absperren und Dosieren von trockenen, frei fließenden Schüttgütern, fließfähigen Pulvern und Granulaten.

Schüttgutschieber werden anhand ihrer Betätigungsart und Form unterschieden. So gibt es Schieber mit quadratischen, rechteckigen und runden Durchgangsöffnungen.

Bekannte Absperrschieber, wie z.B. in der EP 3 505 321 A1 offenbart, zur Absperrung einer Schüttgut führenden Förderleitung zeichnen sich durch ein Schiebergehäuse aus, das die Förderleitung abschnittsweise umgibt, sowie einen im Schiebergehäuse senkrecht zur Förderleitung beweglich gelagerten Schieber zur zeitweisen Absperrung der Förderleitung. Dieser Schieber verfügt über eine Durchgangsöffnung, die bei Fluchtung mit der Förderleitung einen maximalen Durchsatz des Förderguts ermöglicht, wobei das Schiebergehäuse mit einem Bypass luftschlüssig verbunden sein kann. Mit dem Bypass kann bei einer Absperrung der Förderleitung der aus dem Absperrschieber abführende Teil der Förderleitung leer gesaugt werden.

Die Betätigung des Schiebers erfolgt durch einen Pneumatikzylinder oder einen Getriebemotor als Antriebsmechanismus. Wegen der herrschenden hohen Temperaturen wird meist eine relativ dicke Schieberplatte verwendet, um eine Verformung und Ausdehnung bei hohen Temperaturen zu minimieren. Bei dünneren Schieberplatten besteht die Gefahr, dass sie in der Gehäuseführung verkanten und blockieren. Diese Gefahr ist auch dann gegeben, wenn der Schieber auch die Bypassluftzuführung steuert. In diesem Fall ist wegen der an diese Fördersituation angepasste Stirnfläche eine vergrößerte Plattendicke erforderlich, um die Bypassluft effektiv in die Förderleitung umzuleiten, um diese leerzusaugen. Durch die große Bauform muss der Antriebsmechanismus auch mehr Kraft aufbringen, um den Schieber zu betätigen. Außerdem wird wegen der notwendig größeren Plattendicke der Schieberplatte eine vergrößerte Bauhöhe des gesamten Absperrschiebers notwendig.

Der Erfindung liegt deshalb die Aufgabe zugrunde, einen Absperrschieber für die pneumatische Förderung von flugfähigen Schüttgütern zur Absperrung einer Förderleitung mit Bypassvorrichtung der eingangs genannten Art so weiter zu bilden, dass unter Berücksichtig einer einfachen Steuerung und Zuführung der Bypassluft auch ein möglichst flacher und blockierfreier Schieber vorhanden ist, der einen hochwirksamen Spüllluftstrom erzeugen kann.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Zum Absperren und Leersaugen der Förderleitung ist das Schiebergehäuse luftschlüssig mit einer gehäuseseitigen Bypassvorrichtung verbunden, durch die ein Bypassluftstrom bei einer Absperrung der Förderleitung in den aus dem Absperrschieber abführenden Teil der Förderleitung gesaugt wird.

Die gehäuseseitige Bypassvorrichtung ist als separates Spülluftgehäuse ausgebildet, das in Förderrichtung neben dem Schiebergehäuse montiert ist, in dessen Innenraum die abführende Förderleitung geführt ist.

Durch die räumliche Trennung von Spülluftgehäuse und Schiebergehäuse wird der Vorteil erreicht, dass die Schieberplatte dünner ausgeführt werden kann. Damit kann die Bauhöhe des Absperrschiebers insgesamt verkleinert werden. Darüber hinaus kann der Schieber bei höheren Temperaturen betrieben werden und die Schieberplatte hat eine geringere Materialausdehnung und neigt auch bei höheren Temperaturen weniger zum Verklemmen.

Das Spülluftgehäuse der Bypassvorrichtung ist in Förderrichtung bevorzugt unter dem Schiebergehäuse montiert, durch dessen Innenraum die abführende Förderleitung geführt ist, wobei sich auch die erfindungsgemäßen luftführenden Öffnungen, welche im Mantel der abführenden Förderleitung eingebracht sind, innerhalb des Innenraums befinden. Das Spülluftgehäuse ist bevorzugt quaderförmig und hohl. Durch die separate Anordnung des Spülluftgehäuses, das räumlich getrennt vom Schiebergehäuse ist, ergibt sich der Vorteil einer günstigen Luftführung des Bypass-Luftstromes in Verbindung mit einem großvolumigen Lüftungsquerschnitt bei optimaler Führung des Schiebers.

Der plattenförmige Schieber weist zwei verschiedene Bereiche auf, um den Durchsatz des Förderstroms oder der Bypassluft durch das Spülluftgehäuse zu steuern. Dabei handelt es sich um einen Sperrbereich, der von der Vorderseite des plattenförmigen Schiebers gebildet wird und der entweder die Bypassluftzuführung oder das Fördermedium gegenüber dem Spülluftgehäuse sperrt. Zusätzlich verfügt der Schieber über eine dem Rohrdurchmesser angepasste Durchgangsöffnung, welche, wenn deckungsgleich mit der Förderleitung, einen nahezu turbulenz- und hindernisfreien Förderstrom bei Durchsatz des Fördermediums durch den geöffneten Absperrschieber ermöglicht.

Wird der Schieber mit seinem Durchgangsloch in den Verbindungsbereich zwischen ab- und zuführender Förderleitung eingeschoben und ist dieses Durchgangsloch deckungsgleich mit der zu- und der abführenden Förderleitung, wird ein nahezu gerades Durchgangsrohr gebildet. Sind hingegen der Schieber und somit der Verbindungsbereich geöffnet, herrscht nahezu Vakuumdichtheit im Absperrschieber. Dies bedeutet, dass das in der Förderleitung herrschende Vakuum keine Fremdluft ansaugt.

Um eine wirksame vollflächige Absperrung des Durchflussquerschnitts der Förderleitung zu gewährleisten, ist die Förderleitung innerhalb des Absperrschiebers zweigeteilt, wobei in ihrem Verbindungsbereich wahlweise das Durchgangsloch oder der Sperrbereich des Schiebers eingeschoben werden kann. Der Sperrbereich dient dazu, die Förderleitung vollflächig zu verschließen. Somit wird ein weiteres Durchströmen von Fördermedium durch die Förderleitung verhindert. Den nun zurückgezogene Sperrbereich verschließt nun nicht mehr Öffnung in der Seitenplatte des Schiebergehäuses und Bypassluft kann in das Spülluftgehäuse einströmen.

Mit der allgemeinen Bezeichnung "Förderleitung" ist die aus mindestens zwei einzelnen Förderleitungen zusammengesetzte Förderleitung gemeint, wobei die Förderleitungen innerhalb des Absperrschiebers im Verbindungsbereich luftschlüssig miteinander verbunden sind und aus einer dem Absperrschieber zuführenden Förderleitung und einer vom Absperrschieber abführenden Förderleitung bestehen, welche durch den in den Verbindungsbereich eingeschobenen Schieber voneinander getrennt werden.

Verschließt der Schieber den Verbindungsbereich, wird die Vakuumdichtheit des Absperrschiebers aufgehoben und die Bypassvorrichtung aktiv. Bedingt durch den Unterdruck in der Förderleitung, kann nun Bypassluft über einen Filter in das Spülluftgehäuse eingesaugt werden, welches die dem Schieber nachfolgende Förderleitung umgibt, und über die luftführenden Öffnungen in die Förderleitung einströmen.

Die abführende Förderleitung weist erfindungsgemäß innerhalb des Spülluftgehäuses in die zylindrische Wand eingebrachte, luftführende Öffnungen auf, die ein Einströmen von Bypassluft in die Förderleitung ermöglichen. Das Spülluftgehäuse verbindet den Bypasslufteinlass und die luftführenden Öffnungen luftführend miteinander. Durch die am Umfang verteilt angeordneten Öffnungen wird ein möglichst großer Querschnitt erzielt, durch den die Bypassluft einströmen kann, um die Leersaugleistung zu optimieren.

Bevorzugt handelt es sich um in Längsrichtung ausgerichtete Schlitze, wobei die Erfindung nicht auf die Verwendung von Schlitzen beschränkt ist. Auch jegliche andere Form an Öffnungen kann verwendet werden, sofern diese eine Einströmung von Bypassluft ermöglichen. Dies kann beispielsweise auch eine Mehrzahl von Löchern im Mantel der Förderleitung oder anders angeordnete Schlitze oder Ausnehmungen sein, die nicht in Längsrichtung ausgerichtet sind. Je nach Art des zu fördernden Förderguts wird die Größe der Öffnungen so gewählt, dass diese kleiner sind als der Durchmesser des Fördergutes. Somit wird eine Ablagerung des Fördergutes in den Öffnungen während des Förderprozesses vermieden.

Die zu- und abführende Förderleitung kann unterschiedliche Durchmesser aufweisen und die Größe der luftführenden Öffnungen im Bypass kann an den Durchmesser des Fördergutes angepasst werden.

Die abführende Förderleitung weist unterhalb der luftführenden Öffnungen einen kragenartigen Flansch auf, mit dem die Förderleitung mit dem Spülluftgehäuse verschraubt ist.

Der einfacheren Beschreibung halber wird in der folgenden Beschreibung davon ausgegangen, dass die Bypassvorrichtung als luftführende Öffnungen Schlitze aufweist, obwohl die Erfindung nicht darauf beschränkt ist.

Die durch die Schlitze, bedingt durch den Unterdruck in der Förderleitung, angesaugte Bypassluft kann nun die Reste des verbleibenden Förderguts ausräumen und die Förderleitung spülen.

Unter dem Begriff "Bypassluft" ist entweder Umgebungsluft oder mit Stoffen angereicherte Luft oder sonstige bearbeitete Luft zu verstehen, welche über die Bypassvorrichtung in die Förderleitung geleitet wird. Dies kann beispielsweise getrocknete Luft, mit Stickstoff angereicherte Luft oder Luft aus einer anderen Umgebung sein.

Die vorliegende Erfindung ist nicht auf die Verwendung eines Filters zur kontrollierten Zuführung von Bypassluft beschränkt Es kann auch ein Sieb zur Anwendung kommen, wobei ein Einfachheitshalber im Folgenden nur die Anwendung eines Filters beschrieben wird. Anstatt eines Filters oder eines Siebes kann auch eine weitere Rohrleitung zur Zuführung von Luft über einen Anschlussstutzen angeschlossen werden.

Bevorzugt weisen der Filter und die zuführende Förderleitung ein Außengewinde auf, mit dem sie auf und/ oder in das Schiebergehäuse geschraubt werden können. Durch eine solche Gewindeanordnung ist es zudem möglich, die Einschraubtiefe des Filters bzw. des Siebes in das Schiebergehäuse einzustellen. Bevorzugt werden Schraubringe verwendet, welche sich nur durch ein geeignetes Werkzeug lösen lassen, um den Filter bzw. das Sieb zu entfernen. Mittels Distanzringen, welche im Gewindebereich zusätzlich aufgeschoben werden können, kann die Einschraubtiefe bestimmt und beschränkt werden.

Der plattenförmige Schieber weist das Durchgangsloch auf, den davor angeordneten Sperrbereich und eine dahinter montierte Schubstange an welcher der Antriebsmechanismus angreift. Befindet sich der flächige Sperrbereich im Verbindungsbereich der beiden Förderleitungen, ist kein Durchfluss des Förderguts möglich. In dieser Stellung herrscht eine luftschlüssige Verbindung zwischen dem Filter und der abführenden Förderleitung, welche unterhalb des Schiebergehäuses fortgeführt wird.

In dieser Schieberstellung kann nun Bypassluft in den Filter eingesaugt werden und strömt von dort in das Spülluftgehäuse, und dort über die luftführenden Öffnungen in die Förderleitung.

Die unterhalb des Schiebers in Förderrichtung angeordnete Seitenplatte des Schiebergehäuses weist eine Öffnung zur Durchleitung des Bypassluftstroms und eine Durchgangsöffnung zur Durchleitung des Fördermediums auf und beide Öffnungen sind luftführend mit dem an dieser Seite des Schiebergehäuses montierten Spülluftgehäuse verbunden.

Wenn der Schieber in Sperrstellung gezogen wird, wird er auch in Förderrichtung durch den Unterdruck angezogen. Sie wird die Förderleitung zusätzlich abgedichtet.

Bevorzugt ist beispielsweise ein Durchsatz von 120 bis 600 m³ Bypassluft in der Stunde.

Die Förderleitung kann beispielsweise bevorzugt einen Durchmesser zwischen 38 und 90 mm aufweisen.

Die Förderleitung und deren Bauteile sind aus Edelstahl gefertigt, während die Gehäuse aus Aluminium gefertigt sind. Die Schieberplatte ist bevorzugt aus einem Kunststoff gefertigt, wodurch eine verkantungsfreie Führung innerhalb des Schiebergehäuses möglich ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: eine schematische Ansicht eines geöffneten Absperrschiebers nach dem Stand der Technik
Figur 2: eine schematische Ansicht eine geschlossenen Absperrschiebers nach dem Stand der Technik
Figur 3: eine Perspektivansicht die die Aspekte der vorliegenden Erfindung veranschaulicht
Figur 4: eine weitere Perspektivansicht der Erfindung
Figur 5: eine Explosionsansicht gemäß der vorliegenden Erfindung

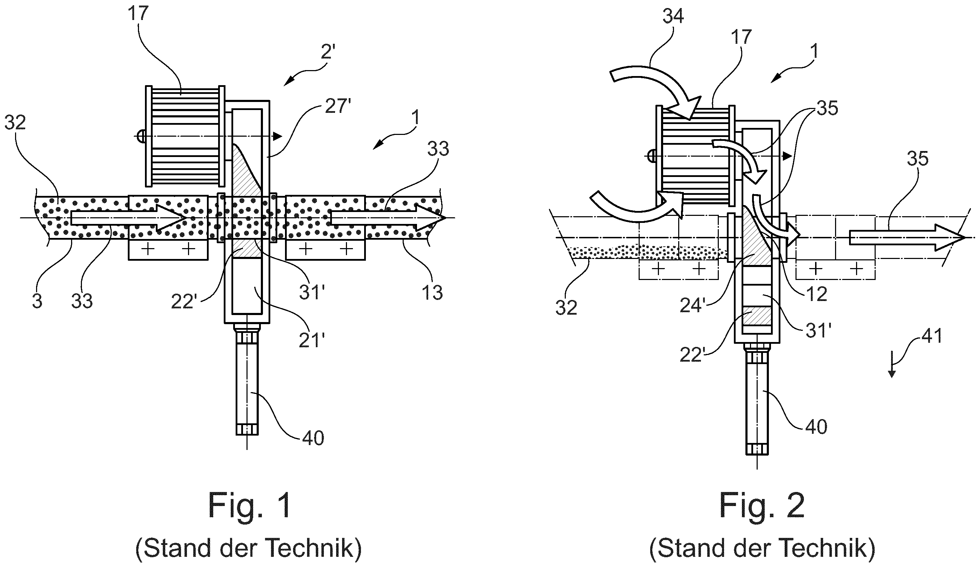

Figur 1 zeigt einen Absperrschieber 1 nach dem Stand der Technik, mit einer Bypass-Vorrichtung 2', welche an einer Förderleitung 3, 13 angebracht ist. Die Förderleitung teilt sich auf in eine in das Gehäuse einführende Förderleitung 3 und eine aus dem Schiebergehäuse 27' abführenden Förderleitung 13.

Im Inneren des Schiebergehäuses 27 ist ein Schieber 22' in Längsrichtung beweglich gelagert und kann von einem Antriebsmechanismus 40 betätigt werden. Der Schieber 22' weist ein Durchgangsloch 31' auf, durch die, bei Deckungsgleichheit mit der Förderleitung 3, das Fördergut ungehindert in Pfeilrichtung 33 durchströmen kann.

Am Schiebergehäuse 27' ist ein Filter 17 angebracht, der die von außen nachströmender Luft filtert. Im gezeigten Beispiel nach Figur 1 ist die Luftführung zwischen Filter 17 und der aus dem Schiebergehäuse abführenden Förderleitung 13 jedoch durch den Schieber 22' versperrt, sodass keine Luft von außerhalb in die Förderleitung 13 strömen kann.

In Figur 2 wurde der Schieber 22' durch den Antriebsmechanismus 40 in Pfeilrichtung 41 gezogen. Das Durchgangsloch 31' ist nun nicht mehr deckungsgleich mit der Förderleitung 3, 13 und ebenfalls in Pfeilrichtung 41 verschoben. Nun ist der Sperrbereich 24' des Schiebers 22' in die Förderleitung eingeschoben und verschließt diese.

Durch die Bewegung des Schiebers 22' in Pfeilrichtung 41 wird auch die Schrägfläche 12, welche sich unterhalb des Sperrbereiches 24' befindet, in Richtung der Förderleitung gezogen, bis sie auf Höhe der Förderleitung 13 einen Durchgang zwischen Schiebergehäuse 27 und Förderleitung 13 bildet.

Da nun der in der Förderleitung 13 herrschende Unterdruck auch auf das luftschlüssig verbundene Schiebergehäuse 27 wirkt, wird Umgebungsluft durch den Filter 17 in Pfeilrichtung 34 eingesaugt. Die Umgebungsluft durchfließt in Strömungsrichtung 35 das Schiebergehäuse 27' und wird in die Förderleitung 13 eingesaugt, wobei in der Förderleitung befindliche Ablagerungen abtransportiert werden können. Nachdem das Schiebergehäuse 27' integraler Bestandteil des Gehäuses des Absperrschiebers 1 ist, ergibt sich eine unerwünscht große Bauhöhe für den Gesamtaufbau. Hier setzt die Erfindung gemäß den nachfolgenden Abbildungen ein.

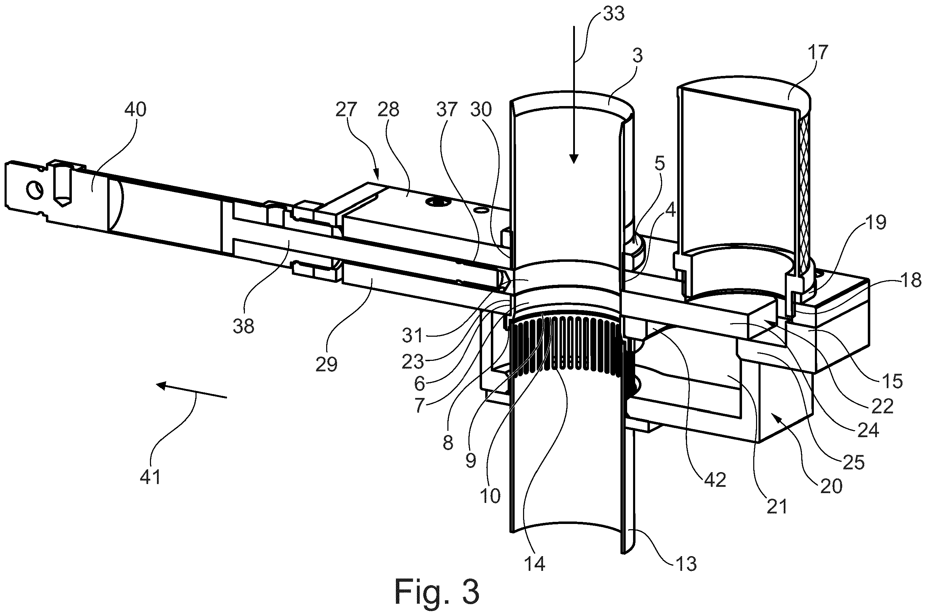

Figur 3 zeigt den erfindungsgemäßen Absperrschieber 1, der sich vom Stand der Technik insbesondere durch die Förderleitung 13 unterscheidet. Die Förderleitung 13 weist am Umfang verteilt angeordnete Schlitze 14 auf, welche sich in Längsrichtung der Förderleitung 13 erstrecken.

Dabei wird es bevorzugt, wenn die gehäuseseitige Bypassvorrichtung 2 als Spülluftgehäuse 20 ausgebildet ist, das in Förderrichtung neben dem Schiebergehäuse 27 montiert ist, in dessen Innenraum 21 die abführende Förderleitung 13 geführt ist.

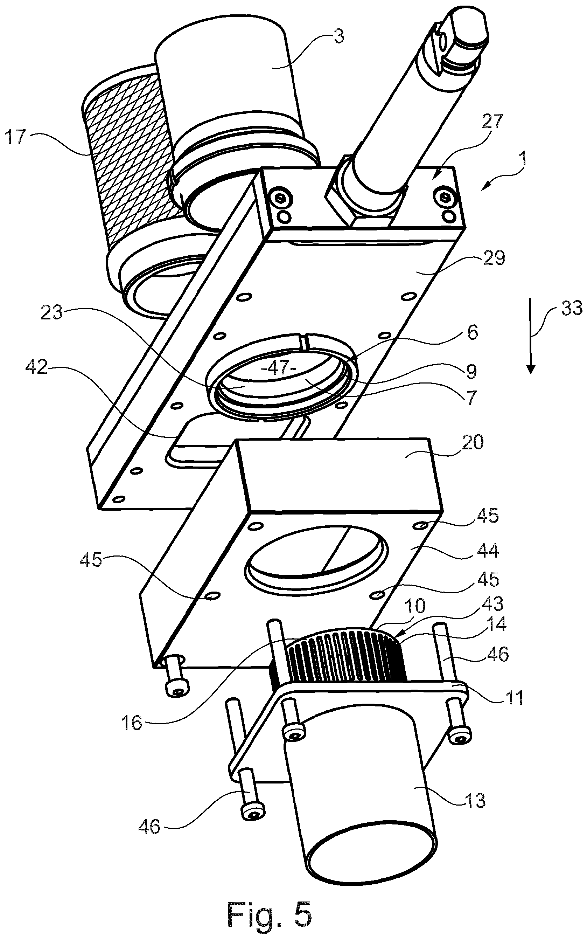

Die kombinierte Förderleitung 3, 13 welche mindestens zweiteilig ausgebildet ist, besteht hauptsächlich aus der auf das Schiebergehäuse 27 zuführenden Förderleitung 3 und einer von dem Gehäuse 27 abführenden Förderleitung 13. Beide Förderleitungen sind über einen Verbindungsbereich 47 im Inneren des Schiebergehäuses 20 miteinander luftführend verbunden. Der Verbindungsbereich ist insbesondere in Figur 5 sichtbar. Dieser Verbindungsbereich 47 verbindet die zueinander beanstandeten Enden der Förderleitungen 3, 13, so dass eine gerade Rohrleitung gebildet wird. Unterhalb der Förderleitung 3 setzt sich, mit gleichem Innendurchmesser, das Durchgangsloch 31 des Schiebers 22 fort und darunter der Kragen 7 der Muffe 6, wobei der Kragen 7 ebenfalls den gleichen Innendurchmesser wie die Förderleitung 3 und auch wie die an den Kragen 7 anschließende Förderleitung 13 hat.

Die Förderleitung 3 verfügt in dem gezeigten Beispiel nach Figur 3 an ihrem dem Gehäuse nächstliegenden, unteren Bereich über ein Außengewinde 4. Mit dem Außengewinde 4 kann die Förderleitung 3 über einen Schraubring 5 mit dem Schiebergehäuse 27 verbunden werden, wobei sich das Außengewinde 4 in das Durchgangsloch 30 der Seitenplatte 28 fortsetzt, in welchem die Förderleitung 3 in dem Schiebergehäuse 27 aufgenommen ist.

Unterhalb des Verbindungsbereichs 47 ist in der Seitenplatte 29 des Schiebergehäuses 27 die Muffe 6 in die Durchgangsöffnung 23 eingebracht, welche mit der Seitenplatte 29 verbunden ist. Die Muffe 6 weist den Kragen 7 auf, mit dem sie sich an den Innenumfang der Durchgangsöffnung 23 anlegt. In Strömungsrichtung unterhalb des Kragens 7 erweitert sich die Muffe 6 in radialer Richtung und bildet den Kragen 8 aus. Am Innenumfang des Kragens 8 befindet sich ein kreisrunder Absatz 9, welche zur Aufnahme der Stirnseite 10 der Förderleitung 13 dient. Somit kann die Förderleitung 13 lagengesichert werden.

Die Seitenplatte 29 weist neben der Durchgangsöffnung 23 eine weitere Öffnung 42 auf, welche im Bereich des Filters 17 angeordnet ist und eine Einströmung von Bypassluft in den Innenraum 21 ermöglicht. Zunächst ist diese Öffnung 42 gemäß Figur 3 durch den Schieber 22 verschlossen, dessen Sperrbereich 24 die Öffnung 42 abdeckt und auf einem Vorsprung 25 am Randbereich der Öffnung 42 aufliegt. Somit kann keine Bypassluft aus dem Filter 17 in den Innenraum 21 strömen.

Der plattenförmige Schieber 22 weist somit zwei wesentliche Bereiche auf. Dies ist zum einen das Durchgangsloch 31, welche bei Fluchtung mit der Förderleitung einen Durchsatz des Fördermediums ermöglicht und zum anderen der Sperrbereich 24, der vor dem Durchgangsloch 31 angeordnet ist und der wahlweise den Verbindungsbereich zwischen den Förderleitungen 3, 13 oder die Öffnung 42 der Bypassvorrichtung 2 bzw. der Seitenplatte 29 oberhalb des Spülluftgehäuses 20 versperrt.

Die Seitenplatte 29 weist einen in Richtung der Seitenplatte 28 ragenden Rahmen 15 auf, auf dem die Seitenplatte 28 aufliegt und der im Randbereich der Seitenplatte 29 umläuft. Bedingt durch den Rahmen 15 wird eine Kammer zwischen den so beabstandeten Seitenplatten 28, 29 gebildet, in der sich der Schieber 22 in Längsrichtung bewegt. Dieser Rahmen 15 ist in Richtung des Antriebsmechanismus 40 in der Weise geöffnet, dass die Schubstange 38 durchgeführt werden kann.

Zur Betätigung des Schiebers 22 weist dieser ein seitliches Bohrloch 37 auf, in das eine Schubstange 38 eingeschraubt ist, die über einen nicht näher dargestellten Antriebsmechanismus 40 in Pfeilrichtung 41 gezogen werden kann.

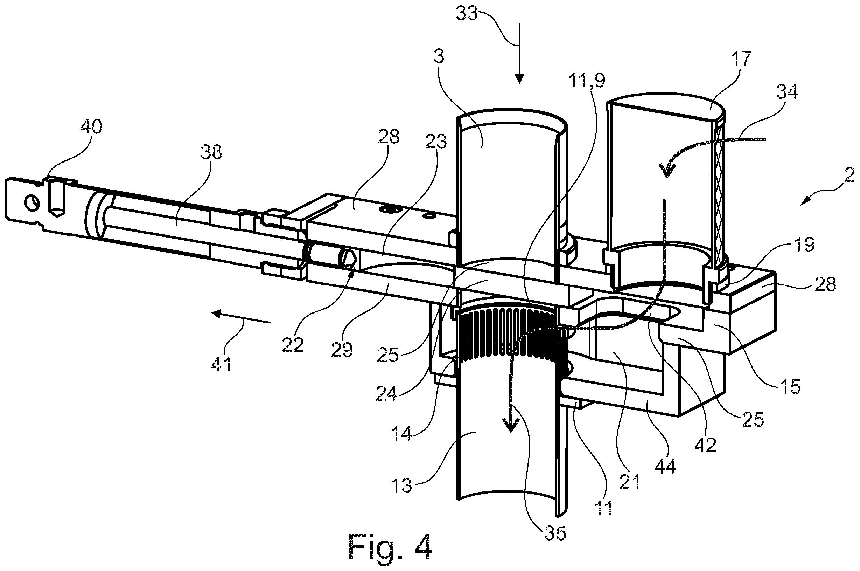

In Figur 4 ist der Schieber 22 in Pfeilrichtung 41 gezogen und der Sperrbereich 24 verdeckt nicht mehr die Öffnung 42. Er befindet sich zwischen den Förderleitungen 3, 13 und trennt diese voneinander ab. Eventuell nachströmendes Fördergut in Förderleitung 3 prallt auf die Oberseite 25 des Sperrbereichs 24 des Schiebers 22. Da jedoch durch den Schieber 22 auch der in der gesamten Förderleitung herrschende Unterdruck unterbrochen bzw. umgeleitet wird, wird auch kein Fördergut mehr durch die Förderleitung 13 in Pfeilrichtung 33 nachgesaugt.

Die Durchgangsöffnung 23 befindet sich nun zwischen den parallelen Seitenplatten 28, 29 und ermöglicht keinen Durchfluss mehr.

Durch das Ziehen des Schiebers 22 in Pfeilrichtung 41 hat sich der Sperrbereich 24 des Schiebers 22 von der Öffnung 42 hin zur Förderleitung 3, 13 verlagert und befindet sich dort im Verbindungsbereich 47. Die Öffnung 42 ist nun offen und ermöglicht eine Luftdurchführung. Der in der Förderleitung 13 immer noch herrschende Unterdruck saugt Bypassluft durch die Öffnung 42 an, welche über das Spülluftgehäuse 20 in die Förderleitung 13 eingesaugt wird. Dies ist durch die Strömungsrichtung 35 dargestellt.

Dazu weist die Förderleitung 13 an ihrem in das Spülluftgehäuse ragenden Rohrabschnitt 43 eine Vielzahl von Schlitzen 14 auf, welche sich in dem hier gezeigten Beispiel in Längsrichtung erstrecken. Die unterdruckbedingt nachgesaugte Bypassluft strömt somit durch die Schlitze 14 hindurch und in die Förderleitung 13 hinein. Vorteilhafterweise kann die Bypassluft aufgrund der kreisförmig angeordneten Schlitze 14 über den gesamten Umfang der Förderleitung, d.h. 360°, in die Förderleitung 13 einströmen.

Oberhalb der Öffnung 42 befindet sich der an der Seitenplatte 28 befestigte Filter 17, über den unterdruckbedingt Bypassluft in Pfeilrichtung 34 in die Bypassvorrichtung 2 eingesaugt wird. Die Bypassluft strömt, nach Passieren des Filters 17, durch die durch den Schieber 22 geöffnete Öffnung 24 in Strömungsrichtung 35 in den Innenraum 21 des Spülluftgehäuses 20 und weiter, durch die Schlitze 14 in die in das Spülluftgehäuse 20 ragende Förderleitung 13. Da die Schlitze 14 der Förderleitung in diesem Bereich über den gesamten Umfang der Förderleitung verteilt sind, kann die Bypassluft auch von allen Seiten, d.h. im Umfang von 360° in die Förderleitung 13 einströmen.

Die Förderleitung 13 weist einen Flansch 11 auf, mit dem sie an der Außenseite des Bodens 44 des Spülluftgehäuses 20 anliegt und befestigt werden kann, wobei eine Schraubbefestigung bevorzugt ist. Der Flansch 11 ist kragenartig am Außenumfang der Förderleitung 13 angebracht, wobei sich die Förderleitung 13, ausgehend vom Flansch in Richtung des Spülluftgehäuses rohrförmig als Rohrabschnitt 43 fortsetzt und erst im oberen Bereich, der in das Gehäuse 20 eingeführt ist, die Schlitze 14 aufweist. Die Förderleitung 13 liegt mit ihrer Stirnseite 11 am Absatz 9 der Muffe 6 an.

Figur 5 zeigt eine Explosionsansicht des Absperrschiebers 1, mit der Förderleitung 13, die den kragenartigen Flansch 11 aufweist, mit dem Sie an der Unterseite des Bodens 44 des Spülluftgehäuses 20 verschraubt werden kann. Dazu weist das Spülluftgehäuse 20 im gezeigten Beispiel vier Gewindebohrungen 45 auf, in die durch den Flansch 11 durchgeführte Schrauben 46 eingreifen und verschraubt werden können.

Oberhalb des Flansches 11 setzt sich die Förderleitung 13 mit dem werkstoffeinstückig damit verbundenen Rohrabschnitt 43 fort, in dessen Mantel 16 die Schlitze 14 eingebracht sind.

Wird der Flansch 11 mit dem Boden 44 verschraubt, ragt der Rohrabschnitt 43 in das Innere des Spülluftgehäuses 20 und die Stirnseite 10 kommt zur Anlage an dem inneren, kreisrunden Absatz 9 der Muffe 6. Die Muffe 6 ist in die Seitenplatte 29 geschraubt und ermöglicht durch ihren, an dem Durchmesser der Förderleitung 3, 13 angepassten Kragen 7 eine luftschlüssige Förderstrecke zwischen der Förderleitung 3 und 13.

Der Verbindungsbereich 47 ist der Abstand zwischen der Förderleitung 3 und der Förderleitung 13, in dem die Muffe 6 und Durchgangsöffnung 23 bei geöffneten Schieber 20 einen Durchfluss des Fördergutes 32 ermöglichen.

Das auf die Seitenplatte 29 aufgesetzte Spülluftgehäuse 20 bildet einen Hohlraum bzw. Innenraum 21 in dessen Inneren der Rohrabschnitt 43 der Förderleitung 13 angeordnet ist. Somit kann die angesaugte Bypassluft durch alle Schlitze 14 hindurch in das Innere der Förderleitung 13 gesaugt werden. Die Bypassluft strömt davor über die Öffnung 42 in den Innenraum 21 des Spülluftgehäuses 20. Der in dem Schiebergehäuse 27 verschiebbar gelagerte Schieber 22 öffnet und verschließt wahlweise die Öffnung 42 oder den Verbindungsbereich 47 und wechselt somit zwischen einem ungestörten Durchfluss des Förderguts 32 in Pfeilrichtung 33 durch die luftschlüssig und fluchtend miteinander verbundenen Förderleitungen 13, 33 oder einem Durchfluss von Bypassluft, welche über den Filter 17 in das Spülluftgehäuse 20 und dann über die Schlitze 14 in die Förderleitung 13 in Strömungsrichtung 35 hineingesaugt wird.

### Zeichnungslegende

- 1: Absperrschieber
- 2, 2': Bypassvorrichtung
- 3: Förderleitung (zuführend)
- 4: Außengewinde
- 5: Schraubring
- 6: Muffe
- 7: Kragen
- 8: Kragen
- 9: Absatz
- 10: Stirnseite (von 48)
- 11: Flansch
- 12: Schrägfläche
- 13: Förderleitung
- 14: Öffnung
- 15: Rahmen
- 16: Mantel
- 17: Filter
- 18: Außengewinde
- 19: Distanzring
- 20: Spülluftgehäuse
- 21, 21': Innenraum
- 22, 22': Schieber
- 23: Durchgangsöffnung (von 29)
- 24, 24': Sperrbereich
- 25: Vorsprung
- 26: Oberseite
- 27, 27': Schiebergehäuse
- 28: Seitenplatte
- 29: Seitenplatte
- 30: Durchgangsloch (von 28)
- 31, 31': Durchgangsloch (von 22)
- 32: Fördergut
- 33: Pfeilrichtung
- 34: Pfeilrichtung
- 35: Strömungsrichtung (Bypassluft)
- 36:
- 37: Bohrloch
- 38: Schubstange
- 39: Gleitlager
- 40: Antriebsmechanismus
- 41: Pfeilrichtung
- 42: Öffnung (von 29)
- 43: Rohrabschnitt (von 13)
- 44: Boden (von 20)
- 45: Gewindebohrung
- 46: Schraube
- 47: Verbindungsbereich

## Patentansprüche

1. Kombination eines Absperrschiebers (1) und einer Förderleitung (3, 13) für die pneumatische Förderung von Schüttgütern zur Absperrung der Förderleitung (3, 13), umfassend ein Schiebergehäuse (27) mit einem im Schiebergehäuse (27) verschiebbar gelagerten Schieber (22, 22') zur zeitweisen Absperrung der Förderleitung (3, 13), wobei in Abhängigkeit von der Stellung des Schiebers (22, 22') ein luftschlüssiger Durchgang durch das Schiebergehäuse (27) oder eine Spülung der mit dem Schiebergehäuse (27) luftschlüssig verbundenen abführenden Förderleitung (3, 13) gegeben ist, wobei zum Absperren und Leersaugen der Förderleitung (3, 13) das Schiebergehäuse (27) luftschlüssig mit einer getrennt angeordneten Bypassvorrichtung (2, 2') verbunden ist, durch die ein Bypassluftstrom bei einer Absperrung der Förderleitung (3) in den aus dem Absperrschieber (1) abführenden Teil der Förderleitung (13) gesaugt wird, und wobei die getrennt ausgebildete Bypassvorrichtung (2) als Spülluftgehäuse (20) ausgebildet ist, das in Förderrichtung neben dem Schiebergehäuse (27) montiert ist, in dessen Innenraum (21) die abführende Förderleitung (13) geführt ist, **dadurch gekennzeichnet, dass** ein zylindrischer Mantel (16) der abführenden Förderleitung (13) innerhalb des Absperrschiebers mehrere luftführende Öffnungen (14) zur Einleitung des Bypassluftstroms aufweist.

2. Kombination nach Anspruch 1, **dadurch gekennzeichnet, dass** sich die luftführenden Öffnungen (14) innerhalb des Innenraums (21) befinden.

3. Kombination nach Anspruch 1 oder 2, **dadurch gekennzeichnet, dass** das Spülluftgehäuse (20) den Bypasslufteinlass (17) und die luftführenden Öffnungen (14) luftführend verbindet.

4. Kombination nach einem der Ansprüche 1 bis 3, **dadurch gekennzeichnet, dass** der Bypasslufteinlass ein Filter (17), ein Sieb, ein Anschlussstutzen oder ein Zuleitungsrohr ist.

5. Kombination nach einem der Ansprüche 1 bis 4, **dadurch gekennzeichnet, dass** die luftführenden Öffnungen (14) Schlitze oder Löcher im Mantel (16) der Förderleitung (13) sind.

6. Kombination nach einem der Ansprüche 1 bis 5, **dadurch gekennzeichnet, dass** die unterhalb des Schiebers (22) in Förderrichtung angeordnete Seitenplatte (29) des Schiebergehäuses (27) eine Öffnung (42) zur Durchleitung des Bypassluftstroms und eine Durchgangsöffnung (23) zur Durchleitung des Fördermediums aufweist und die Öffnung (42) und die Durchgangsöffnung (23) in den Innenraum (21) des an dieser Seite des Schiebergehäuses (27) montierten Spülluftgehäuse (20) münden.

7. Kombination nach einem der Ansprüche 1 bis 6, **dadurch gekennzeichnet, dass** die abführende Förderleitung (13) auswechselbar ist.

8. Kombination nach einem der Ansprüche 1 bis 7, **dadurch gekennzeichnet, dass** die abführende Förderleitung (13) unterhalb der luftführenden Öffnungen (14) einen kragenartigen Flansch aufweist, mit dem die Förderleitung (13) mit dem Spülluftgehäuse (20) verschraubt ist.

9. Kombination nach einem der Ansprüche 1 bis 8, **dadurch gekennzeichnet, dass** der plattenförmige Schieber (22) ein Durchgangsloch (31) aufweist, welches bei Fluchtung mit der Förderleitung (3, 13) einen Durchsatz des Fördermediums (32) ermöglicht und einen Sperrbereich (24) aufweist, der in Längsrichtung vor dem Durchgangsloch (31) angeordnet ist und der wahlweise einen Verbindungsbereich (47) zwischen den Förderleitungen (3, 13) oder die Öffnung (42) der Bypassvorrichtung (2) am Eingang des Spülluftgehäuses (20) versperrt.

## Claims

1. Combination of a gate valve (1) and a conveying line (3, 13) for pneumatic conveying of bulk goods to isolate the conveying line (3, 13), comprising a slide housing (27) with a slide (22, 22') mounted displaceably in the slide housing (27) for temporary isolation of the conveying line (3, 13), wherein as a function of the position of the slide (22, 22'), an air-tight passage through the slide housing (27) or flushing of the discharging conveying line (3, 13) connected in air-tight manner to the slide housing (27) is provided, wherein to isolate and draw empty the conveying line (3, 13), the slide housing (27) is connected in air-tight manner to a bypass device (2, 2') arranged separately, though which a bypass air stream is drawn into the part of the conveying line (13) discharging from the gate valve (1) when isolating the conveying line (3), and wherein the bypass device (2) configured separately is configured as a flushing air housing (20) which is mounted next to the slide housing (27) in conveying direction, in the interior (21) of which the discharging conveying line (13) is guided, **characterised in that** a cylindrical jacket (16) of the discharging conveying line (13) has within the gate valve several air-guiding openings (14) to initiate the bypass air stream.

2. Combination according to claim 1, **characterised in that** the air-guiding openings (14) are located within the interior (21).

3. Combination according to claim 1 or 2, **characterised in that** the flushing air housing (20) connects the bypass air inlet (17) and the air-guiding openings (14) in air-guiding manner.

4. Combination according to one of claims 1 to 3, **characterised in that** the bypass air inlet is a filter (17), a screen, a connection or a supply pipe.

5. Combination according to one of claims 1 to 4, **characterised in that** the air-guiding openings (14) are slots or holes in the jacket (16) of the conveying line (13).

6. Combination according to one of claims 1 to 5, **characterised in that** the side plate (29) of the slide housing (27) arranged below the slide (22) in conveying direction has an opening (42) for conducting the bypass air stream and a passage opening (23) for conducting the conveying medium and the opening (42) and the passage opening (23) lead into the interior (21) of the flushing air housing (20) mounted on this side of the slide housing (27).

7. Combination according to one of claims 1 to 6, **characterised in that** the discharging conveying line (13) can be replaced.

8. Combination according to one of claims 1 to 7, **characterised in that** the discharging conveying line (13) below the air-guiding openings (14) has a collar-like flange, with which the conveying line (13) is screwed onto the flushing air housing (20).

9. Combination according to one of claims 1 to 8, **characterised in that** the plate-like slide (22) has a passage hole (31) which facilitates throughput of the conveying medium (32) when aligning with the conveying line (3, 13) and has an isolating region (24) which is arranged upstream of the passage hole (31) in longitudinal direction and which optionally closes a connecting region (47) between the conveying lines (3, 13) or the opening (42) of the bypass device (2) at the entrance to the flushing air housing (20).

## Revendications

1. Combinaison d'une vanne d'arrêt (1) et d'une conduite de convoyage (3, 13) pour le convoyage pneumatique de produits en vrac pour fermer la conduite de convoyage (3, 13), comprenant un corps de vanne (27) avec une vanne (22, 22') montée de manière à pouvoir coulisser dans le corps de vanne (27) pour la fermeture temporaire de la conduite de convoyage (3, 13), dans laquelle, en fonction de la position de la vanne (22, 22'), on a un passage étanche à l'air à travers le corps de vanne (27) ou un rinçage de la conduite de convoyage (3, 13) d'évacuation reliée de manière étanche à l'air au corps de vanne (27), dans laquelle, pour la fermeture et l'aspiration de vidange de la conduite de convoyage (3, 13), le corps de vanne (27) est relié de manière étanche à l'air à un dispositif de dérivation (2, 2') disposé séparément, par lequel un flux d'air de dérivation est aspiré dans la partie de la conduite de convoyage (13) d'évacuation hors de la vanne d'arrêt (1) lors d'une fermeture de la conduite de convoyage (3), et dans laquelle le dispositif de dérivation (2) réalisé séparément est réalisé en un boîtier d'air de rinçage (20) qui est monté à côté du corps de vanne (27) dans la direction de convoyage, dans l'espace intérieur (21) duquel mène la conduite de convoyage (13) d'évacuation, **caractérisée en ce qu'**une enveloppe cylindrique (16) de la conduite de convoyage (13) d'évacuation présente à l'intérieur de la vanne d'arrêt plusieurs ouvertures d'amenée d'air (14) pour l'introduction du flux d'air de dérivation.

2. Combinaison selon la revendication 1, **caractérisée en ce que** les ouvertures d'amenée d'air (14) se trouvent à l'intérieur de l'espace intérieur (21).

3. Combinaison selon la revendication 1 ou 2, **caractérisée en ce que** le boîtier d'air de rinçage (20) relie avec amenée d'air l'entrée d'air de dérivation (17) et les ouvertures d'amenée d'air (14).

4. Combinaison selon l'une des revendications 1 à 3, **caractérisée en ce que** l'entrée d'air de dérivation est un filtre (17), un tamis, un manchon de raccordement ou un tuyau d'alimentation.

5. Combinaison selon l'une des revendications 1 à 4, **caractérisée en ce que** les ouvertures d'amenée d'air (14) sont des entailles ou des trous dans l'enveloppe (16) de la conduite de convoyage (13).

6. Combinaison selon l'une des revendications 1 à 5, **caractérisée en ce que** la plaque latérale (29) du corps de vanne (27) disposée sous la vanne (22) dans la direction de convoyage présente une ouverture (42) pour le passage du flux d'air de dérivation et une ouverture de passage (23) pour le passage du milieu de convoyage, et l'ouverture (42) et l'ouverture de passage (23) débouchent dans l'espace intérieur (21) du boîtier d'air de rinçage (20) monté dudit côté du corps de vanne (27).

7. Combinaison selon l'une des revendications 1 à 6, **caractérisée en ce que** la conduite de convoyage d'évacuation (13) est remplaçable.

8. Combinaison selon l'une des revendications 1 à 7, **caractérisée en ce que** la conduite de convoyage d'évacuation (13) présente, sous les ouvertures d'amenée d'air (14), une bride en forme de collerette avec laquelle la conduite de convoyage (13) est vissée au boîtier d'air de rinçage (20).

9. Combinaison selon l'une des revendications 1 à 8, **caractérisée en ce que** la vanne (22) en forme de plaque présente un trou de passage (31) qui permet, en alignement avec la conduite de convoyage (3, 13), un débit du milieu de convoyage (32) et présente une zone de blocage (24) qui est disposée dans la direction longitudinale devant le trou de passage (31) et qui obture aux choix une zone de raccordement (47) entre les conduites de convoyage (3, 13) ou l'ouverture (42) du dispositif de dérivation (2) sur l'entrée du boîtier d'air de rinçage (20).
